# FASCICULE DE BREVET EUROPEEN

(11) **EP 3 170 589 B1**
(45) Date de publication et mention de la délivrance du brevet: **31.01.2018**
(21) Numéro de dépôt: 16198069.3
(22) Date de dépôt: 10.11.2016
(51) Int. Cl.: B22F 3/105, B28B 1/00, B29C 67/00, B33Y 10/00, B33Y 70/00

(54) **PROCEDE DE FABRICATION D'UNE PIECE EN TROIS DIMENSIONS SUR UN SUPPORT PAR UNE MÉTHODE DE FABRICATION ADDITIVE SUIVI D'UNE ÉTAPE DE DÉTACHEMENT DU SUBSTRAT**
GENERATIVES HERSTELLUNGSVERFAHREN EINES DREIDIMENSIONALEN OBJEKTS AUF EINEM SUBSTRAT GEFOLGT VON DER ENTFERNUNG DIESES SUBSTRATS
METHOD OF ADDITIVE MANUFACTURING OF A THREE DIMENSIONAL PART ON A SUBSTRATE FOLLOWED BY A STEP OF REMOVAL OF THE SUBSTRATE

(30) Priorité: 17.11.2015 FR 1561025
(43) Date de publication de la demande: 24.05.2017
(73) Titulaire: COMMISSARIAT À L'ÉNERGIE ATOMIQUE ET AUX ÉNERGIES ALTERNATIVES, 75015 Paris (FR)
(72) Inventeur: LAUCOURNET, Richard, 38500 LA BUISSE (FR)
(74) Mandataire: Cabinet Laurent & Charras

(56) Documents cités:
- WO-A1-2014/172496
- US-A1- 2015 042 017
- US-A1- 2015 050 463
- PATTISON ET AL: "Cold gas dynamic manufacturing: A non-thermal approach to freeform fabrication", INTERNATIONAL JOURNAL OF MACHINE TOOL DESIGN AND RESEARCH, PERGAMON PRESS, OXFORD, GB, vol. 47, no. 3-4, 15 décembre 2006 (2006-12-15), pages 627-634, XP005804252, ISSN: 0020-7357, DOI: 10.1016/J.IJMACHTOOLS.2006.05.001

## Description

### DOMAINE DE L'INVENTION

La présente invention s'inscrit dans le domaine de la fabrication de pièces en trois dimensions sur un support.

Les applications visées concernent notamment les impressions tridimensionnelles consistant à déposer des couches successives de matériaux sur un support pour former une pièce en trois dimensions.

L'invention concerne plus particulièrement la fabrication additive de pièces métalliques.

### ETAT ANTERIEUR DE LA TECHNIQUE

La fabrication additive est définie comme étant le procédé de mise en forme d'une pièce par ajout de matière, à l'opposé de la mise en forme traditionnelle par enlèvement de matière (usinage).

La fabrication additive permet notamment de fabriquer des formes très complexes, certaines irréalisables avec les procédés conventionnels, et avec une grande diversité de matériaux. Cela permet également de réaliser des pièces monobloc, c'est-à-dire des pièces sans assemblage. Les domaines d'application de la fabrication additive sont à l'heure actuelle déjà très variés. Elle est très utilisée pour le prototypage rapide lors de la conception d'un objet avec pour but de réduire les temps de fabrication des prototypes et de diminuer leurs coûts. La fabrication additive trouve également beaucoup d'applications dans des domaines tels que l'aéronautique, la médecine (substituts osseux sur mesure, implants dentaires) ou encore l'automobile.

La fabrication additive métallique se base principalement sur deux technologies qui présentent des propriétés et des applications différentes. La technologie de fusion/frittage laser sur lit de poudre (ou SLM/SLS dans la littérature anglo-saxonne pour « *Selective Laser Melting*/ *Sintering*») consiste à utiliser un laser ou un faisceau d'électrons pour faire fondre ou fritter une couche fine d'un matériau poudreux. Une seconde couche est ensuite déposée puis fondue/frittée sur la couche précédente.

La technologie de fusion/frittage laser par projection de poudre (ou LMD dans la littérature anglo-saxonne pour « *Laser Metal Deposition*») consiste à utiliser un laser pour faire fondre la surface métallique de la pièce sur laquelle est simultanément projeté un jet de poudre. Cette poudre fond et forme une couche qui fusionne avec le substrat.

Quelle que soit la technologie de fabrication additive, elle s'appuie sur la construction de pièces à partir d'un support, plateau ou piston métallique plan, souvent de matière identique ou proche de la pièce déposée ou formée sur le support. Par conséquent, la fabrication additive d'une pièce métallique comprend systématiquement une opération finale de traitement visant à séparer la pièce réalisée de son support.

Cette opération d'extraction de la pièce réalisée du support est généralement réalisée par traitement mécanique. Le document US 2014/0034626 décrit l'utilisation d'un fil électrique pour découper la base de la pièce réalisée afin de la désolidariser du support. Ce document décrit également une technique d'amincissement du support visant à supprimer le support collé à la pièce réalisée.

Cependant, cette opération d'extraction engendre trois inconvénients. Premièrement, le support n'est pas réutilisable en l'état après l'opération d'extraction. Ainsi, le support doit généralement être usiné avant de pouvoir être réutilisé pour supporter une nouvelle pièce. Deuxièmement, après l'opération d'extraction, la face de la pièce réalisée au contact du support présente des traces de découpe ou des aspérités dues aux produits chimiques utilisés pour l'amincissement. Ainsi, il est nécessaire d'effectuer un traitement de surface sur la face de la pièce réalisée qui était au contact du support. Troisièmement, l'opération d'extraction est un processus complexe, qui impacte négativement le temps de réalisation de la pièce tridimensionnelle.

### EXPOSE DE L'INVENTION

La présente invention vise à remédier aux inconvénients de l'opération d'extraction à l'aide d'une couche sacrificielle disposée sur le support avant la réalisation de la pièce tridimensionnelle, et permettant la séparation de la pièce avec le support.

A cet effet, l'invention concerne un procédé de fabrication d'une pièce en trois dimensions sur un support, le procédé comportant les étapes suivantes :
- dépôt d'une couche sacrificielle sur le support,
- réalisation de la pièce en trois dimensions au-dessus de la couche sacrificielle,
- hydrogénation de la couche sacrificielle de sorte à entraîner une expansion volumique de la couche sacrificielle, et
- séparation de la pièce du support par rupture de la couche sacrificielle expansée.

L'invention permet ainsi d'extraire rapidement une pièce tridimensionnelle d'un support sans dégrader le support. Le support peut alors être réutilisé pour fabriquer une nouvelle pièce tridimensionnelle. En outre, l'état de surface de la pièce obtenue est amélioré par rapport aux méthodes d'extraction de l'art antérieur. Il n'est donc plus nécessaire d'effectuer un traitement de surface sur la face de la pièce réalisée au contact du support. Ainsi, le temps de fabrication d'une pièce en trois dimensions sur un support est réduit par rapport aux procédés de fabrication de l'état de la technique.

Selon un mode de réalisation, la couche sacrificielle contient un matériau de la gamme des lanthanides, tels que le néodyme (Nd), le praséodyme (Pr), le dysprosium (Dy), le cérium (Ce), ou le lanthane (La). Ces matériaux ou des alliages comportant ces matériaux sont particulièrement adaptés pour supporter la réalisation de pièces métalliques par la technique de fusion/frittage laser sur lit de poudre ou par la technique de fusion/frittage laser par projection de poudre. En outre, l'hydrogénation de ces lanthanides créée une expansion volumique conséquente de ces matériaux, facilitant ainsi l'étape de séparation de la pièce du support car la couche sacrificielle est fragilisée.

Selon un mode de réalisation, la couche sacrificielle est réalisée à partir de magnésium (Mg). Ce matériau est également adapté pour supporter la réalisation de pièces métalliques par la technique de fusion/frittage laser sur lit de poudre ou par la technique de fusion/frittage laser par projection de poudre. En outre, l'hydrogénation de magnésium créée une expansion volumique conséquente, facilitant l'étape de séparation de la pièce du support. Contrairement aux terres rares que sont les lanthanides, le magnésium est un matériau plus commun et moins complexe à extraire.

Selon un mode de réalisation, l'étape d'hydrogénation est effectuée avec de l'hydrogène pur ou de l'hydrogène dilué dans un gaz neutre, tel que l'azote, l'argon ou l'hélium. Ce mode de réalisation permet de transformer efficacement la couche sacrificielle.

Selon un mode de réalisation, l'étape d'hydrogénation est effectuée dans une enceinte étanche. Ce mode de réalisation permet de limiter l'impact des gaz ambiants sur la transformation de la couche sacrificielle.

Selon un mode de réalisation, l'étape de dépôt de la couche sacrificielle sur le support est réalisée par un dépôt physique en phase vapeur (ou PVD dans la littérature anglo-saxonne pour « *Physical Vapor Deposition* »). Ce mode de réalisation est particulièrement adapté au dépôt d'une couche sacrificielle en terres rares ou en magnésium.

Selon un mode de réalisation, l'étape de dépôt de la couche sacrificielle sur le support est réalisée par un dépôt chimique en phase vapeur (ou CVD dans la littérature anglo-saxonne pour « *Chemical Vapor Deposition* »). Ce mode de réalisation est également adapté au dépôt d'une couche sacrificielle en terres rares ou en magnésium.

Selon un mode de réalisation, l'étape de dépôt de la couche sacrificielle sur le support est réalisée par électrodéposition. Ce mode de réalisation est également adapté au dépôt d'une couche sacrificielle en terres rares ou en magnésium.

Selon un mode de réalisation, l'étape de séparation de la pièce du support est effectuée à température ambiante sous une pression partielle d'hydrogène inférieure à 5% de la pression atmosphérique. De préférence, la séparation est effectuée dans un environnement non explosif pour éviter que l'hydrogène contenu dans la couche sacrificielle ne puisse créer une explosion.

Selon un mode de réalisation, l'étape de dépôt de la couche sacrificielle sur le support est configurée de sorte à obtenir une épaisseur de la couche sacrificielle supérieure à 5 micromètres. Ce mode de réalisation permet d'obtenir une séparation efficace de la pièce et du support.

### BREVE DESCRIPTION DE LA FIGURE

La manière dont l'invention peut être réalisée et les avantages qui en découlent ressortiront mieux des exemples de réalisation qui suivent, donnés à titre indicatif et non limitatif, à l'appui d'une figure annexée :

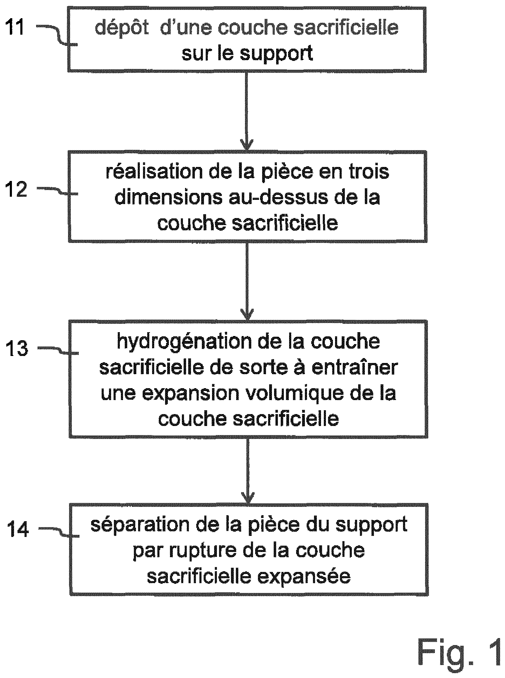

La figure 1 illustre un organigramme des étapes d'un procédé de fabrication d'une pièce en trois dimensions sur un support selon un mode de réalisation de l'invention.

### EXEMPLES DE REALISATION DE L'INVENTION

La figure 1 illustre un organigramme des étapes d'un procédé de fabrication d'une pièce tridimensionnelle.

Une première étape **11** consiste à déposer une couche sacrificielle sur un support. La couche sacrificielle est préférentiellement réalisée à partir de métal de terres rares, telles que les lanthanides, d'un alliage de lanthanides, ou de magnésium (Mg). Les métaux suivants de la gamme des lanthanides sont particulièrement adaptés pour réaliser tout ou partie de la couche sacrificielle : le néodyme (Nd), le praséodyme (Pr), le dysprosium (Dy), le cérium (Ce), et le lanthane (La).

Le dépôt de la couche sacrificielle est réalisée par un dépôt physique en phase vapeur ou PVD, par un dépôt chimique en phase vapeur ou CVD, ou par électrodéposition jusqu'à obtenir une épaisseur de la couche sacrificielle supérieure à 5 micromètres.

Une seconde étape **12** consiste à fabriquer la pièce tridimensionnelle. La pièce tridimensionnelle peut, par exemple, être réalisée par le processus de fusion/frittage laser sur lit de poudre ou SLM/SLS. Le principe de ce processus est de faire fondre une fine couche de poudre (métallique, plastique, céramique,...) à l'aide d'un laser de forte puissance. Dans une première étape, une fine couche de poudre est étalée par un rouleau sur un piston de fabrication recouvert de la souche sacrificielle. Au début de la réalisation de la pièce, le piston est à son point le plus haut.

Lors d'une seconde étape, cette couche de poudre est frittée/fondue par un laser de forte puissance qui trace une section 2D sur la surface de la poudre, la solidification a lieu immédiatement après l'arrêt du laser.

Lors d'une troisième étape, le piston supportant le modèle 3D en cours de réalisation descend de l'épaisseur de la couche réalisée, tandis que les cartouches d'alimentation en poudre ajustent leur niveau avec celui du plateau. Une nouvelle couche de poudre est étalée et le processus se répète jusqu'à l'obtention du modèle 3D. Au cours de ce processus, l'atmosphère de la chambre de construction de la machine doit être contrôlé afin d'assurer l'homogénéité des propriétés de la pièce et éviter l'oxydation de la poudre métallique mise en oeuvre et celle de la couche sacrificielle sensible également à l'oxydation.

La pièce tridimensionnelle peut également être réalisée par le processus de fusion/frittage laser par projection de poudre ou LMD. Ce processus consiste à faire fondre la surface d'une pièce métallique déposée sur la couche sacrificielle à l'aide d'un laser. Simultanément, un jet de poudre est projeté sur la zone en fusion. Cette poudre fond sur la zone en fusion et vient ainsi former une couche qui fusionne avec le substrat. Cette technologie est utilisée à la fois pour élaborer des pièces 3D et pour réparer des pièces. Elle présente notamment l'avantage d'obtenir une très bonne cohésion métallurgique entre le revêtement appliqué et le substrat. Ce processus peut également être utilisé pour faire des traitements de surfaces spéciaux avec pour but final d'améliorer la résistance à la corrosion ou à l'usure.

En variante, d'autres processus de construction d'une pièce tridimensionnelle peuvent être mis en oeuvre sans s'écarter de l'esprit de l'invention. A l'issue de cette seconde étape **12,** une pièce tridimensionnelle est créée. Cette pièce est toujours solidaire du support par l'intermédiaire de la couche sacrificielle.

La troisième étape **13** consiste à hydrogéner la couche sacrificielle pour obtenir une expansion volumique de la couche sacrificielle et ainsi réduire sa résistance. Le processus d'hydrogénation consiste à incorporer de l'hydrogène dans le matériau constitutif de la couche sacrificielle.

Ainsi, lorsque la couche sacrificielle est réalisée en magnésium (Mg), l'hydrogénation a pour effet de transformer le magnésium en hydrure de magnésium (MgH₂) avec une expansion volumique sensiblement égale à 29% de son volume initial. De même, lorsque la couche sacrificielle est réalisée en néodyme (Nd), l'hydrogénation a pour effet de transformer le néodyme en hydrure de néodyme (NdH₃) avec une expansion volumique sensiblement égale à 29% de son volume initial.

Lorsque la couche sacrificielle est réalisée en praséodyme (Pr), l'hydrogénation a pour effet de transformer le praséodyme en hydrure de praséodyme (PrH₃) avec une expansion volumique sensiblement égale à 18,4% de son volume initial.

Lorsque la couche sacrificielle est réalisée en dysprosium (Dy), l'hydrogénation a pour effet de transformer le dysprosium en hydrure de dysprosium (DyH₃) avec une expansion volumique sensiblement égale à 22,6% de son volume initial.

Lorsque la couche sacrificielle est réalisée en cérium (Ce), l'hydrogénation a pour effet de transformer le cérium en hydrure de cérium (CeH₃) avec une expansion volumique sensiblement égale à 22,8% de son volume initial.

Enfin, lorsque la couche sacrificielle est réalisée en lanthane (La), l'hydrogénation a pour effet de transformer le lanthane en hydrure de lanthane (LaH₃) avec une expansion volumique sensiblement égale à 17,2% de son volume initial.

Cette étape d'hydrogénation est préférentiellement effectuée avec de l'hydrogène pur ou dilué dans un gaz neutre (azote, argon, hélium) dans une enceinte étanche. L'action de l'hydrogène transforme la couche sacrificielle déposée et conduit à un gonflement et une fragilisation de la couche sacrificielle, permettant la séparation de la pièce de son support. En outre, l'hydrogénation ne modifie pas la structure d'une pièce métallique créée par le processus de fusion/frittage laser par projection de poudre ou par le processus de fusion/frittage laser sur lit de poudre.

La dernière étape **14** consiste à séparer la pièce du support. La séparation peut être réalisée à température ambiante sous une pression partielle d'hydrogène faible inférieure à 5% de la pression atmosphérique dans un environnement non explosif.

L'invention permet ainsi de réaliser une pièce tridimensionnelle et de simplifier l'étape de séparation de la pièce réalisée du support. Il n'est plus nécessaire d'effectuer un traitement de surface de la face de la pièce qui était au contact du support. En outre, le procédé de l'invention réduit le temps de réalisation d'une pièce tridimensionnelle, notamment pour les pièces métalliques réalisées par le processus de fusion/frittage laser par projection de poudre ou par le processus de fusion/frittage laser sur lit de poudre.

## Revendications

1. Procédé de fabrication d'une pièce en trois dimensions sur un support, ***caractérisé* en ce qu'**il comporte les étapes suivantes :
- dépôt (11) d'une couche sacrificielle sur le support,
- réalisation (12) de la pièce en trois dimensions au-dessus de la couche sacrificielle,
- hydrogénation (13) de la couche sacrificielle de sorte à entraîner une expansion volumique de la couche sacrificielle, et
- séparation (14) de la pièce du support par rupture de la couche sacrificielle expansée.

2. Procédé de fabrication d'une pièce en trois dimensions sur un support selon la revendication 1, ***caractérisé* en ce que** la couche sacrificielle contient un matériau de la gamme des lanthanides, tels que le néodyme (Nd), le praséodyme (Pr), le dysprosium (Dy), le cérium (Ce), ou le lanthane (La).

3. Procédé de fabrication d'une pièce en trois dimensions sur un support selon la revendication 1, ***caractérisé* en ce que** la couche sacrificielle contient du magnésium (Mg).

4. Procédé de fabrication d'une pièce en trois dimensions sur un support selon l'une des revendications 1 à 3, ***caractérisé* en ce que** l'étape d'hydrogénation (13) est effectuée avec de l'hydrogène pur ou de l'hydrogène dilué dans un gaz neutre tel que l'azote, l'argon ou l'hélium.

5. Procédé de fabrication d'une pièce en trois dimensions sur un support selon l'une des revendications 1 à 4, ***caractérisé* en ce que** l'étape d'hydrogénation (13) est effectuée dans une enceinte étanche.

6. Procédé de fabrication d'une pièce en trois dimensions sur un support selon l'une des revendications 1 à 5, ***caractérisé* en ce que** l'étape de dépôt (11) de la couche sacrificielle sur le support est réalisée par un dépôt physique en phase vapeur ou PVD.

7. Procédé de fabrication d'une pièce en trois dimensions sur un support selon l'une des revendications 1 à 5, ***caractérisé* en ce que** l'étape de dépôt (11) de la couche sacrificielle sur le support est réalisée par un dépôt chimique en phase vapeur ou CVD.

8. Procédé de fabrication d'une pièce en trois dimensions sur un support selon l'une des revendications 1 à 5, ***caractérisé* en ce que** l'étape de dépôt (11) de la couche sacrificielle sur le support est réalisée par électrodéposition.

9. Procédé de fabrication d'une pièce en trois dimensions sur un support selon l'une des revendications 1 à 8, ***caractérisé* en ce que** l'étape de séparation (14) de la pièce du support est effectuée à température ambiante sous une pression partielle d'hydrogène inférieure à 5% de la pression atmosphérique.

10. Procédé de fabrication d'une pièce en trois dimensions sur un support selon l'une des revendications 1 à 9, ***caractérisé* en ce que** l'étape de dépôt (11) de la couche sacrificielle sur le support est configurée de sorte à obtenir une épaisseur de la couche sacrificielle supérieure à 5 micromètres.

## Patentansprüche

1. Generatives Herstellungsverfahren eines dreidimensionalen Objekts auf einem Träger, **dadurch gekennzeichnet, dass** es die folgenden Schritte umfasst:
- Abscheiden (11) einer Opferschicht auf dem Träger,
- Ausführung (12) des dreidimensionalen Objekts über der Opferschicht,
- Hydrierung (13) der Opferschicht, um eine Volumenausdehnung der Opferschicht zu verursachen, und
- Abtrennung (14) des Objekts vom Träger durch Reissen der expandierten Opferschicht.

2. Generatives Herstellungsverfahren eines dreidimensionalen Objekts auf einem Träger nach Anspruch 1, **dadurch gekennzeichnet, dass** die Opferschicht ein Material aus der Reihe der Lanthanoide enthält, wie Neodym (Nd), Praseodym (Pr), Dysprosium (Dy), Cer (Ce) oder Lanthan (La).

3. Generatives Herstellungsverfahren eines dreidimensionalen Objekts auf einem Träger nach Anspruch 1, **dadurch gekennzeichnet, dass** die Opferschicht Magnesium (Mg) enthält.

4. Generatives Herstellungsverfahren eines dreidimensionalen Objekts auf einem Träger nach einem der Ansprüche 1 bis 3, **dadurch gekennzeichnet, dass** der Schritt der Hydrierung (13) mit reinem Wasserstoff oder mit in neutralem Gas, wie Stickstoff, Argon oder Helium, gelösten Wasserstoff erfolgt.

5. Generatives Herstellungsverfahren eines dreidimensionalen Objekts auf einem Träger nach einem der Ansprüche 1 bis 4, **dadurch gekennzeichnet, dass** der Schritt der Hydrierung (13) in einem dichten Gehäuse erfolgt.

6. Generatives Herstellungsverfahren eines dreidimensionalen Objekts auf einem Träger nach einem der Ansprüche 1 bis 5, **dadurch gekennzeichnet, dass** der Schritt der Abscheidung (11) der Opferschicht auf dem Träger durch eine physikalische Abscheidung in der Gasphase oder PVD ausgeführt wird.

7. Generatives Herstellungsverfahren eines dreidimensionalen Objekts auf einem Träger nach einem der Ansprüche 1 bis 5, **dadurch gekennzeichnet, dass** der Schritt der Abscheidung (11) der Opferschicht auf dem Träger durch eine chemische Abscheidung in der Gasphase oder CVD ausgeführt wird.

8. Generatives Herstellungsverfahren eines dreidimensionalen Objekts auf einem Träger nach einem der Ansprüche 1 bis 5, **dadurch gekennzeichnet, dass** der Schritt der Abscheidung (11) der Opferschicht auf dem Träger durch galvanische Abscheidung erfolgt.

9. Generatives Herstellungsverfahren eines dreidimensionalen Objekts auf einem Träger nach einem der Ansprüche 1 bis 8, **dadurch gekennzeichnet, dass** der Schritt der Abtrennung (14) des Objekts vom Träger bei Raumtemperatur unter einem partiellen Wasserstoffdruck von unter 5 % des Atmosphärendrucks stattfindet.

10. Generatives Herstellungsverfahren eines dreidimensionalen Objekts auf einem Träger nach einem der Ansprüche 1 bis 9, **dadurch gekennzeichnet, dass** der Schritt der Abscheidung (11) der Opferschicht so konfiguriert ist, dass eine Dicke der Opferschicht von über 5 Mikrometern erhalten wird.

## Claims

1. Method of manufacturing of a three-dimensional part on a substrate, **characterized in that** it includes the following steps:
• deposition (11) of a sacrificial layer onto the substrate;
• manufacturing (12) of the three-dimensional part above the sacrificial layer;
• hydrogenation (13) of the sacrificial layer so as to cause an expansion in volume of the sacrificial layer; and
• separation (14) of the part from the substrate by breaking the expanded sacrificial layer.

2. Method of manufacturing of a three-dimensional part on a substrate in accordance with claim 1, **characterized in that** the sacrificial layer contains a material of the range of lanthanides, such as neodyme (Nd), praseodyme (Pr), dysprosium (Dy), cerium (Ce) or lanthane (La).

3. Method of manufacturing of a three-dimensional part on a substrate in accordance with claim 1, **characterized in that** the sacrificial layer contains magnesium (Mg).

4. Method of manufacturing of a three-dimensional part on a substrate in accordance with one of claims 1 to 3, **characterized in that** the hydrogenation step (13) is performed with pure hydrogen or hydrogen diluted in a neutral gas such as nitrogen, argon or helium.

5. Method of manufacturing of a three-dimensional part on a substrate in accordance with one of claims 1 to 4, **characterized in that** the hyrogenation step (13) is performed within a sealed chamber.

6. Method of manufacturing of a three-dimensional part on a substrate in accordance with one of claims 1 to 5, **characterized in that** the step of deposition (11) of the sacrificial layer on the substrate is performed using a physical vapor deposition or PVD phase.

7. Method of manufacturing of a three-dimensional part on a substrate in accordance with one of claims 1 to 5, **characterized in that** the step of deposition (11) of the sacrificial layer on the substrate is performed using a chemical vapor deposition or CVD phase.

8. Method of manufacturing of a three-dimensional part on a substrate in accordance with one of claims 1 to 5, **characterized in that** the step of deposition (11) of the sacrificial layer on the substrate is performed using electrodeposition.

9. Method of manufacturing of a three-dimensional part on a substrate in accordance with one of claims 1 to 8, **characterized in that** the step of separation (14) of the part from the substrate is performed at an ambient temperature under partial hydrogen pressure at 5% of atmospheric pressure.

10. Method of manufacturing of a three-dimensional part on a substrate in accordance with one of claims 1 to 9, **characterized in that** the step of deposition (11) of the sacrificial layer on the substrate is configured so as to obtain a thickness of the sacrificial layer greater than 5 micrometers.
